# EUROPEAN PATENT APPLICATION

(11) **EP 1 988 642 A1**
(43) Date of publication of application: **05.11.2008**
(21) Application number: 06110434.5
(22) Date of filing: 27.02.2006
(51) Int. Cl.: H04B 7/005

(54) **Output power control with timeslot based operation mode switching**

(71) Applicant: BenQ Mobile GmbH & Co. oHG, 81667 München (DE)
(72) Inventor: Langer, Andreas, 85716 Unterschleissheim-Lohhof (DE); Menge, Michael, 81475 München (DE); Schlager, Detlef, 82024 Taufkirchen (DE)
(74) Representative: Potter, Julian Mark

(57) **Abstract**

The present invention proposes an operation mode control for a power amplifier of an output stage (1) for portable electronic equipment for wireless communication (50). The operation mode control comprises means (S0) for receiving a command that requests a change of the output power of power amplifier (2), means (S1, 55) for identifying a current operation mode of the power amplifier, means (S2) for determining if the power amplifier may be operated in a further operation mode different to the current operation mode for the output power requested by the command,
means (S3, 57) for assessing the history of preceding output power requests, and means (S6, 58) for evaluating from the assessed history of preceding output power requests a trend value that indicates the likeliness of a future output power of the output stage to remain for a defined time period within a range enabling an operation of the power amplifier also in the further operation mode. The operation mode is hereby changed over from the current operation mode to the further operation mode on condition that the evaluated trend value indicates a sufficient likeliness for a future output power to remain for the defined time period within a range enabling an operation of the power amplifier in the further operation mode, and on condition that the further operation mode enables a more energy-efficient operation of the power amplifier than the current operation mode.

## Description

The present invention relates to a power management of portable electronic equipment for wireless communication used in a UMTS wireless communication network. In particular, the present invention relates to an energy-saving operation mode control of a power amplifier of the portable electronic equipment for wireless communication having its output power controlled in response to commands received from a base station of a UMTS system.

Portable electronic equipment for wireless communication and in particular those used as mobile radio terminals in wireless communication networks like e.g. mobile telephones, pagers, communicators, electronic organisers, smartphones, PDA's (Personal Digital Assistants), or the like require a control of their transmitting power. Without a respective control, an appliance of the above mentioned types might block a whole cell of a UMTS system. Power control, i.e. control of the transmitting power on the uplink (data transmission from a portable electronic equipment to a base station of a wireless communication network) is generally seen as one of the important aspects of a CDMA (Code Division Multiple Access) system, since a base station separates portable electronic equipment for wireless communication operating within the same frequency only by their respective spreading codes. Without a power control mechanism, one of these portable appliances might overshout the others and thus block a significant part of a cell.

The term portable electronic equipment for wireless communication includes all non-stationary radio appliances, which are adapted for a wireless communication network. Since it operates as a terminal of a wireless communication network and offers, due to its portability a mobility within the range of the wireless communication network, the terms mobile radio terminal, mobile terminal and mobile station are used within this specification as synonyms for portable electronic equipment for wireless communication.

For controlling the transmitting power of a mobile radio terminal, a so-called inner loop power control (ILPC), also referred to as fast closed loop power control is used. The base station hereby performs frequent estimates of the received Signal-to-Interference (SIR) of the uplinks and compares the estimates with a target value. The base station then sends a transmit power control (TPC) command to the mobile station for correcting the difference between the estimate and the target value. If the estimated SIR is higher than the target value, the base station will send a power-down command, if the SIR is lower than the specified value the base station will send a power-up command to the mobile radio terminal. The mobile radio terminal reacts to the command by decreasing or increasing its transmitting power. The estimate-command-react cycle is repeated at every timeslot, i.e. every 666.66 µsec or 1,500 times per second. The IPLC thus reacts faster than a possibly significant change in the transmission conditions like e.g. fading might happen.

The ILPC causes a mobile terminal to operate at the lowest possible transmitting power for a sufficient SIR at the base station it is linked to. In the normal case the mobile radio terminal will therefore transmit with a transmitting power lower than its maximum output power. Nevertheless, the mobile radio terminal has to provide the possibility to transmit at its maximum output power for enabling a sufficient SIR in a deep fade situation. The output stage of a mobile radio terminal's transmission circuitry has to show sufficient linearity at the maximum output power condition for the ACLR (Adjacent Channel Leakage Ratio) to be within the target values at this operating condition. The ACLR determines how much of the transmitted power is allowed to leak into neighbouring carriers. Its value increases with increasing non-linearity of the mobile terminal's power amplifier forming the transmission power stage. At lower than maximum transmitting power, the ACLR improves because the power amplifier is operated farer from saturation rendering it more linear than when operated for maximum output power. The whole transmission circuit of a mobile radio terminal is therefore geared towards a maximum output power. It is to be noted in this context, that despite the fact that the technical meaning of the terms "output power" and "transmission power" might not always be identical to the full extend, both terms are used as equivalents within this specification.

At lower output powers, only the signal strength at the input of a power amplifier is reduced, not its working point adjustment. This results in a reduced efficiency of the output stage for its working point unchanged. The consequence is a reduced on-air time and thus a reduced serviceability of the mobile radio terminal.

Common measures for improving the energy-efficiency of the output stage are techniques like a power amplifier bias switch, a power amplifier load switch or the like, which allow to operate the power amplifier in two different operation modes. A first mode optimised for maximum transmitting power, and a second mode for a low transmitting power. These techniques allow to operate the power amplifier in a more energy-efficient mode at low output powers.

A major drawback of these systems is however that the transmitted signal is phase rotated when the power amplifier is switched from one operation mode to the other. Starting with release 3GPPTS25.101 (3GPPTS = 3^{rd} Generation Partnership Project Technical Specification; 3GPP is a project of standard organisations from Japan (ARIB and TTC), Europe (ETSI), Korea (TTA), China (CWTS) and USA (T1P1)), a respective phase change is not allowed to exceed 30°. Only every fifth slot, i.e. timeslot, the phase is allowed to rotate between 30° and 60°. Since the phase rotation between the two operating conditions of a power amplifier can be larger than 30°, a changeover between the operation modes is only possible every fifth slot. This rule is referred to as the fifth slot approach. A typical step size of a power change in response to a TPC command and in the slot immediately after receiving the TPC command is 2dB. Due to the described fifth slot approach, the output power may therefore change by 10dB during inner loop power control, before the operation mode of the power amplifier is allowed to be changed.

Most equipment manufacturers use a so-called output power hysteresis for improving the energy-efficiency of a mobile radio terminal. Hereby two transition thresholds are defined. At the upper threshold and above, the power amplifier is always operated in the so-called high bias mode, i.e. the operation condition where it is optimised for maximum transmitting power. At the lower threshold and below, the power amplifier is always operated in the so-called low bias mode, i.e. the operation condition where it is optimised for a reduced transmitting power. Between the thresholds, the power amplifier is operated in the mode it has been before entering the output power range between the thresholds. That means that the operation mode of the power amplifier between the threshold values depends on the history of the output power provided by the output stage. Depending on the history, the power amplifier is operated within this range either in low bias mode or high bias mode. Since, the transmitting power of a UMTS capable portable electronic equipment for wireless communication networks can typically be controlled in the range from -50 dBm to 24 dBm and with reference to the fifth slot approach, the upper threshold limit is in an example set to 16 dBm and the lower threshold limit to 6 dBm.

With an assumed phase rotation of 40° degree between the two operating modes of the power amplifier the output power control of the mobile radio terminal has to obey the fifth slot approach. When a mobile station starts with a low power output, the power amplifier will initially be operated in the low bias mode. When requested to increase its transmitting power during ILPC, the power amplifier operation condition, i.e. its operation mode will only be switch to high bias mode when arriving at the upper threshold limit of 16 dBm. As this takes at least 5 slots, the associated phase rotation of 40° does not infringe the system specifications.

When the base station sends a power-down command directly after the changeover of the operation mode of the power amplifier, the high bias mode has to be maintained, since the specification allows a 40° phase rotation associated with a further operation mode changeover not until 5 slots after the last changeover. For continued power-down commands the operation condition will be changed at 6 dBm output power. If the transmitting power is not requested to be decreased to 6 dBm, the power amplifier will be kept in the energy consuming high bias mode. The effect of the current output power hysteresis solution is therefore that the operation mode of a power amplifier of a mobile radio terminal depends, when operated at a transmitting power between the thresholds, on the output power history. It is either operated in low bias mode, which is good for a long on-air time, or in high bias mode, which is harmful to a long on-air time. But very often, the power amplifier is used in high bias mode, even when the low bias mode could already be used from an ACLR point of view.

Even when the phase change between the two operating modes of a power amplifier is below the required 30°, e.g. 25°, it is useful to use an output power hysteresis but with a reduced hysteresis range of e.g. about 4 dB in order to prevent the mobile radio terminal from toggling between two operation conditions every slot as this would disturb the connection to the base station and even the whole network. The above explained drawback of an output power hysteresis system applies therefore also to a use of a power amplifier having a phase rotation below the specified limit per timeslot.

It is therefore an object of the present invention to provide a means for improving the energy efficiency of a power amplifier being operable at two or more operation conditions for at least one output power, when the output power of the power amplifier is controlled by power control system.

This object is achieved by the invention as defined in the independent claims. Further developments of the invention are the subject of dependent claims.

The present invention comprises a method for controlling the operation mode of a power amplifier of an output stage for portable electronic equipment for wireless communication. The Method comprises a step for receiving a command that requests a change of the output power of the power amplifier, a step for identifying a current operation mode of the power amplifier, a step for determining if the power amplifier may be operated in a further operation mode different to the current operation mode for the output power requested by the command, a step for assessing the history of preceding output power requests, and a step for evaluating from the assessed history of preceding output power requests a trend value that indicates the likeliness of a future output power of the output stage to remain for a defined time period within a range enabling an operation of the power amplifier also in the further operation mode. The operation mode is hereby changed over from the current operation mode to the further operation mode on condition that the evaluated trend value indicates a sufficient likeliness for a future output power to remain for the defined time period within a range enabling an operation of the power amplifier in the further operation mode, and on condition that the further operation mode enables a more energy-efficient operation of the power amplifier than the current operation mode and if it is necessary from a phase rotation point of view.

The present invention further comprises an operation mode control for a power amplifier of an output stage for portable electronic equipment for wireless communication, whereby the power amplifier is adapted to be operated at two or more different operation modes. The operation mode control comprises an operation mode storage means, an output power storage means, an output power history assessing means, an output power trend evaluation means, and an operation mode control means. The operation mode storage means is adapted for storing a current mode value related to a current operation mode of the power amplifier and is adapted for storing a mode efficiency value representing the energy-efficiency of an operation mode of the power amplifier. The output power storage means is adapted for storing values related to preceding output power settings of the output stage. The output power history assessing means is adapted for assessing a history of preceding output power requests for the output stage based on values stored in the output power storage means. The output power trend evaluation means is adapted to evaluate a trend value indicating the likeliness of a future output power of the output stage to remain for a defined time period within a range enabling an operation of the power amplifier in at least also a further operation mode different from the current operation mode, and the operation mode control means is adapted to control the operation mode of the power amplifier based on the trend value and the current mode value such, that it effects a changeover of the operation mode of the power amplifier from a current operation mode to a further operation mode on the condition that the evaluated trend value indicates a sufficient likeliness for a future output power to remain for the defined time period within a range enabling an operation of the power amplifier in the further operation mode, and further on condition that the further operation mode enables a more energy-efficient operation of the power amplifier than a current operation mode.

The above object is further achieved by the invention comprising a computer software product for controlling the operation mode of a power amplifier of an output stage for a portable electronic equipment for wireless communication, whereby the computer software product is adapted, when loaded into a storage means and processed by a data processing means of the electronic equipment for wireless communication to set-up thereon an operation mode control according to the invention and to perform thereon a method according to the invention.

It should be emphasised that the terms "comprises" and "comprising" used in this specification are taken to specify the presence of stated figures, integers, steps or components but do not preclude the presence or addition of one or more other features, integers, steps, components or groups thereof.

The present invention enables a more energy-efficient operation of a portable electronic equipment for wireless communication resulting in an increased on-air time of up to 20% with the currently available technologies, when used in an UMTS system employing inner loop power control.

In an advantageous development enabling a changeover of the operation mode at the earliest possible time, the trend value is evaluated based on the condition that the output power is requested to be below a defined threshold value, and no operation mode changeover has been effected within a defined number of preceding time timeslots.

In a preferred embodiment of the present invention, it is guaranteed that the interval between any two operation mode changeovers of the power amplifier is never less than a defined number of timeslots by having the trend value evaluated based on the condition that the output power is requested to be below a defined threshold value for a minimum of the defined number of preceding timeslots.

In order to avoid frequent switchovers of operation modes, the trend value is evaluated in a further preferred development based on the condition that the output power is requested to be below a defined threshold value and with no changes for a defined number of preceding timeslots.

For enabling an operation mode changeover only for cases where the requested output power is stable or decreasing for a certain time interval, the trend value is evaluated in a further advantageous development based on the condition that the output power is requested to be below a defined threshold value and for a defined number of preceding timeslots the output power requested for a subsequent timeslot is lower or equal that of an anterior timeslot in the defined number of preceding timeslots. Hereby a further condition may be obeyed, according to which all output power requests within the defined number of preceding timeslots are for an output power below the defined threshold value in order to ensure that any interval between any two operation mode changeovers of the power amplifier is never shorter than the defined number of timeslots.

In the following, the present invention is explained in more detail with respect to special embodiments and with reference to the enclosed drawings, in which
- Figure 1: shows a basic concept of a conventional output stage of a portable electronic equipment for wireless communication,
- Figure 2: shows the operation modes used for two exemplary transmitting power behaviours under output power hysteresis condition,
- Figure 3a: shows a first embodiment of a timeslot based operation mode control,
- Figure 3b: shows a further embodiment of a timeslot based operation mode control,
- Figure 4: shows a flowchart indicating the basic steps of a timeslot based operation mode control according to the present invention, and
- Figure 5: shows a portable electronic equipment for wireless communication with a timeslot based operation mode control according to the present invention.

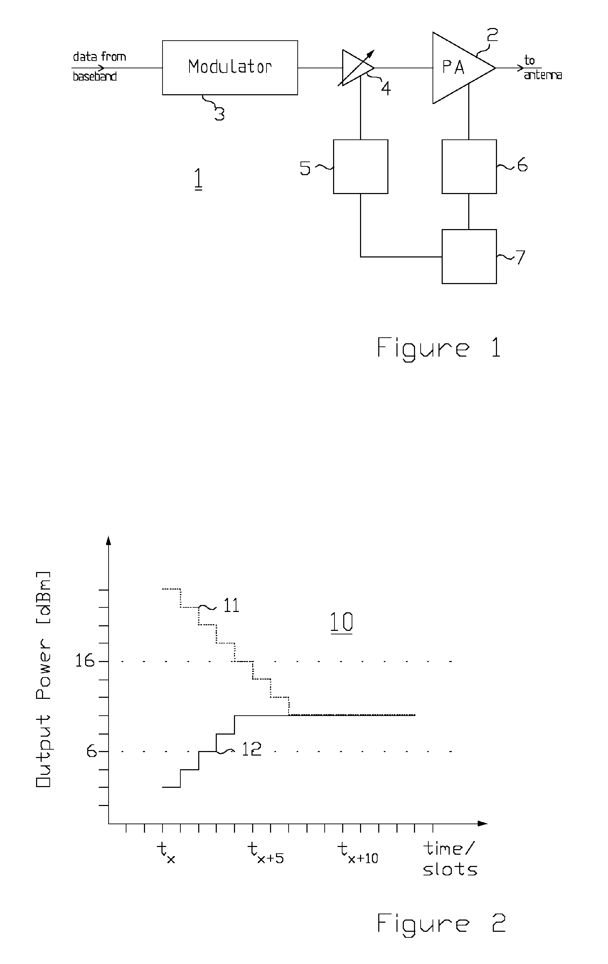

The schematic of Figure 1 shows a basic concept of an output stage 1 of a portable electronic equipment for wireless communication using an efficiency enhancement technique based on an operation mode switching of power amplifier 2. Signals from the baseband circuitry of the electronic equipment, which is not shown in the figure, are modulated in the modulator 3 before undergoing a first amplification by amplifier 4 having its gain controlled by gain control 5. The thus amplified signal is provided from the output terminal of amplifier 4 to the signal input terminal of power amplifier (PA) 2 of the output stage 1 for boosting the signal. The output of power amplifier 2 provides the boosted signal to a not shown antenna for being transmitted to the wireless communication network. Power amplifier 2 is adapted for an operation at two or more operation modes. The term operation mode means, that the power amplifier is operated at a certain operating condition characterised by a defined working point. The working point is adjusted by means of a mode switch 6, like e.g. a PA bias switch, a PA load switch or the like.

Instead of using only one single power amplifier circuit operable at two or more working points, the power amplifier 2 may be composed of several individual power amplifier circuits, whereby each individual circuit is adjusted to a different working point. Changing the operation mode of power amplifier 2 in the single amplifier circuit embodiment requires a readjustment of its working point to a different operation condition. For the multiple amplifier embodiment with the power amplifier 2 formed by two or more individual power amplifier circuits, a change of the operation mode is accomplished by selecting a different one of the individual power amplifier circuits.

In a UMTS system using inner loop power control, the operation mode has to be adapted to the transmitting power requested by the base station. The mode switch 6 is for this purpose controlled by an output power control 7, which further controls gain control 5 to achieve the desired output power value. In conventional systems using output power hysteresis, the output power control 7 controls the mode switch 6 to operate the power amplifier 2 in an operation mode enabling maximum output power, when e.g. a transmitting power of 16 dBm or more is requested. This operation mode for maximum transmitting power is referred to as high bias mode in this specification. For a transmitting power requested to be e.g. 6 dBm or below, the output power control 7 controls the mode switch 6 to switch the power amplifier into a mode where it consumes less energy than in the high bias mode. This mode is referred to as the low bias mode in this specification.

In the output power range between 6 dBm and 16 dBm, the power amplifier 2 can be operated in any of the two operation modes, therefore the name output power hysteresis. Which mode is used at a time depends on the history of previously requested output powers. If the portable electronic equipment for wireless communication has been operated in the high bias mode before being requested to reduce the transmitting power to a value in the range between 16 dBm and 6 dBm, then the power amplifier 2 will continue to operate in the high bias mode also within this range. On the contrary, when the portable electronic equipment for wireless communication has been operated in the low bias mode before being requested to increase the transmitting power to a value in the range between 6 dBm and 16 dBm, then the power amplifier 2 will continue to operate in the low bias mode within this range.

The output power hysteresis is illustrated in diagram 10 of Figure 2. The dotted line 11 in Figure 2 shows an example for a transmitting power change with the power amplifier 2 being in high bias mode. The solid line 12 shows an example for a transmitting power change with the power amplifier 2 being in low bias mode. In both cases, the output power is controlled for a final transmitting power of 10 dBm.

When the portable electronic equipment for wireless communication is requested to transmit with an output power of 16 dBm or above, the power amplifier 2 is operated in high bias mode. On reducing the transmitting power to a value below 16 dBm, the operation mode of the power amplifier is maintained as long as the transmitting power is not reduced to 6 dBm or below. In the example shown in Figure 2, the electronic equipment for wireless communication is requested to transmit at 10 dBm for quite a certain time, without ever being lowered to 6 dBm. The power amplifier 2 therefore operates in the energy consuming high bias mode.

In the other example indicated by line 12, the power amplifier starts in low bias mode increasing its output power step by step at the beginning of every slot to the desired value corresponding to a transmitting power of 10 dBm. Although the portable electronic equipment for wireless communication now transmits with the same out power than in the example indicated by line 11, the power amplifier operates in the more energy-efficient low bias mode.

Although the operation mode of power amplifier 2 is allowed to change every fifth slot for the case of a phase change between 30° and 60°, in a conventional output hysteresis system the operation mode will not be changed before the respective other threshold limit of the transmitting power range is reached, irrespective of the time interval already passed by. The potential on-air time of a portable equipment for wireless communication is thus reduced below the technical permitted.

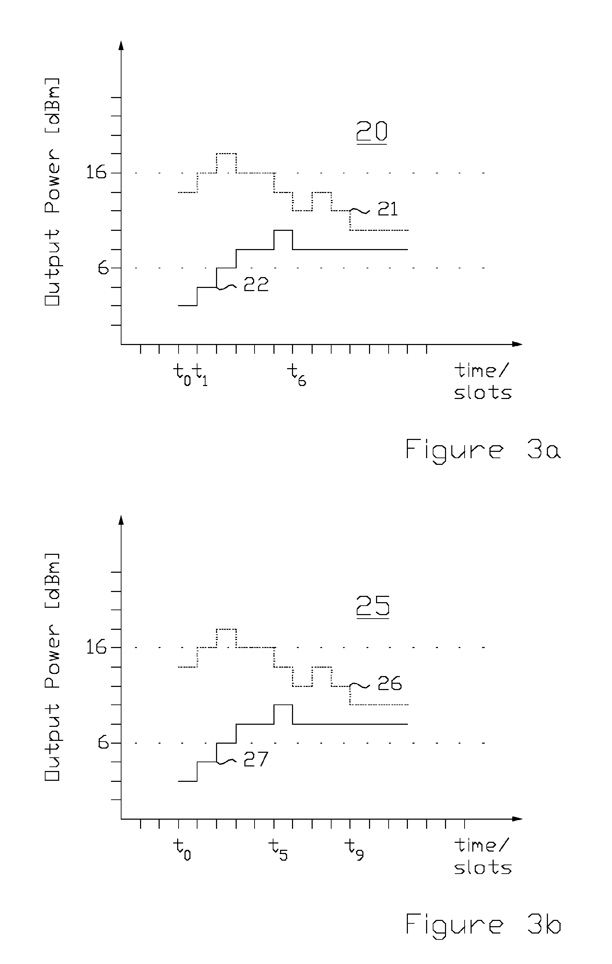

To overcome this drawback of a conventional output power hysteresis, a timeslot based operation mode control as for instance illustrated in diagram 20 of Figure 3a is proposed. Graph 21 shows an exemplary transmitting power behaviour of a portable electronic equipment for wireless communication when being requested to reduce its transmitting power from values at or above 16 dBm to values located in the power hysteresis range between 6 dBm and 16 dBm. To comply with the regulations of Release 5 of 3GPPTS25.101, the operation mode of a power amplifier showing more than 30° phase rotation between its operation modes may not be changed before the fifth slot after the last change. In the example given by graph 21 in Figure 3a, the first changeover indicated by a transition from a solid to a dotted line takes place at time t₁, when the transmitting power is set to 16 dBm with the power amplifier being in low bias mode before. The next allowable changeover is therefore at the earliest possible with the slot beginning at time t₆, i.e. five timeslots later. This slot is according to the example the second slot within the hysteresis range between 6 dBm and 16 dBm. Since the power amplifier 2 can be operated in the output power hysteresis range in both, the high bias as well as the low bias mode, and since five slots are shown to have passed by since the last operation mode changeover, the mode switch 6 is now controlled to switch the power amplifier 2 into the energy-saving low bias mode (indicated by the transition from the dotted to the solid line of graph 21) at time t₆, thereby improving the possible on-air time of the portable electronic equipment for wireless communication.

An example for the transmitting power of the portable electronic equipment for wireless communication entering the output power hysteresis range from below 6 dBm is given by graph 22 in Figure 3a. Since the hysteresis range is entered in low bias mode, the power amplifier 2 is already operated in its energy-efficient state. There is therefore no need to switch the operation mode of the power amplifier 2 unless the transmitting power is requested to be 16 dBm or higher.

A further timeslot based operation mode control for improving the energy-efficiency of a portable electronic equipment for wireless communication is illustrated in diagram 25 of Figure 3b. The behaviour of the transmitting power of the shown example is the same as that of Figure 3a. Distinct from the timeslot based operation mode control illustrated therein, a timeslot based operation mode control according to that shown by graph 26 in diagram 25 waits at least 5 slots for the transmitting power to be below 16 dBm (in the example given at time t₉), before it initialises a changeover of the power amplifier 2 from its high bias mode into its low bias mode. Albeit the power amplifier may in some cases be operated in high bias mode for some slots longer than with an operation control according to that explained with respect to Figure 3a, it advantageously avoids any infringement of the above described fifth slot approach also for the case where the ILPC commands the portable electronic equipment for wireless communication to return to a transmitting power of 16 dBm or above less than 5 slots after entering the output power hysteresis range.

Like for the example of Figure 3a, there is no need to switch the operation mode of power amplifier 2 when entering the hysteresis range in low bias mode (solid line 27) unless the transmitting power is requested to be 16 dBm or higher.

A problem may arise in a scenario, where the output power toggles between a few states near the upper power limit of the output power hysteresis range. Here it is very likely, that the output power will return to a value requiring the high bias mode. In order to avoid frequent switching of the power amplifier's 2 operation mode, which could disturb the wireless connection and impair the network stability, the timeslot based operation mode control will initialise a change of the operation mode of the power amplifier not until the output power was requested to not change or to decrease for a pre-defined number of slots. The number of slots may be less than five, when the total number of slots since the last operation mode changeover or after entering the output power hysteresis range from the upper threshold is then five or more.

In a further advantageous timeslot based operation mode control the history of preceding transmitting power changes is assessed in order to evaluate a trend for the output power to stay below the upper threshold value of the power hysteresis range. For assessing the history of previous transmitting power changes, a pre-defined number of preceding transmitting power settings are stored. For a better evaluation of the power emission history, the preceding transmitting power changes can be stored related to the respective operation modes used, e.g. in form of tuples. A tendency of output power changes is then derived from the stored data according to criteria like toggling of the transmitting power around or close to the upper threshold of the output power hysteresis range, substantially constantly decreasing output power, past power changes occur all at a secure distance from the upper threshold of the output power hysteresis range, extremely frequent power changes over a wide range of transmitting powers as e.g. induced due to deep fading influences in a transmission path, or other suited criteria alike.

The timeslot based operation mode control explained above has been described in form of an extension of an output power hysteresis system. It may however also be implemented as a stand-alone operation mode control, i.e. being independent of an output power hysteresis system applicable within an output power control. In this case, a threshold output value is defined, below which the power amplifier can be operated in low bias mode with sufficient ACLR. This threshold takes on the function of the described upper threshold of an output power hysteresis range with regard to the different embodiments of a timeslot based operation mode control as explained.

If the power amplifier 2 is adapted to be driven at more than two operation modes with the power ranges covered by the operation modes overlapping, the above described timeslot based operation mode control is implemented as explained below. A lower output power threshold value is defined for each operation mode, on which the power amplifier is to be operated in the respective operation mode, and above which it may further be operated in a higher output power operation mode. If the transmitting power is requested to be increased to a respective lower threshold value or above, the power amplifier is switched in the corresponding operation mode as long as the output power stays below a possible further lower threshold of a higher output power operation mode.

If the requested output power falls below a lower threshold level, the power amplifier may be run in the operation mode requested for the lower threshold level or the operation mode requested for the next lower threshold level. The timeslot based mode control will then select the more energy-efficient of the two possible operation modes for power amplifier 2 according to an embodiment for a timeslot based operation mode described above. The lower threshold level of a multiple operation mode power amplifier hereby corresponds to the upper threshold for which and above which a two operation mode power amplifier 2 has to be driven in high bias mode. In other words, if a power amplifier can be run in two different operation modes for a current output power with the current operation mode being more energy-consuming than the other possible, then the timeslot based operation mode control will changeover to the more energy-efficient operation mode on condition that either five slots have passed by since the last operation mode changeover, the output power is below the lower threshold level for (at least) five slots or a trend evaluation of a power change history complies with defined criteria.

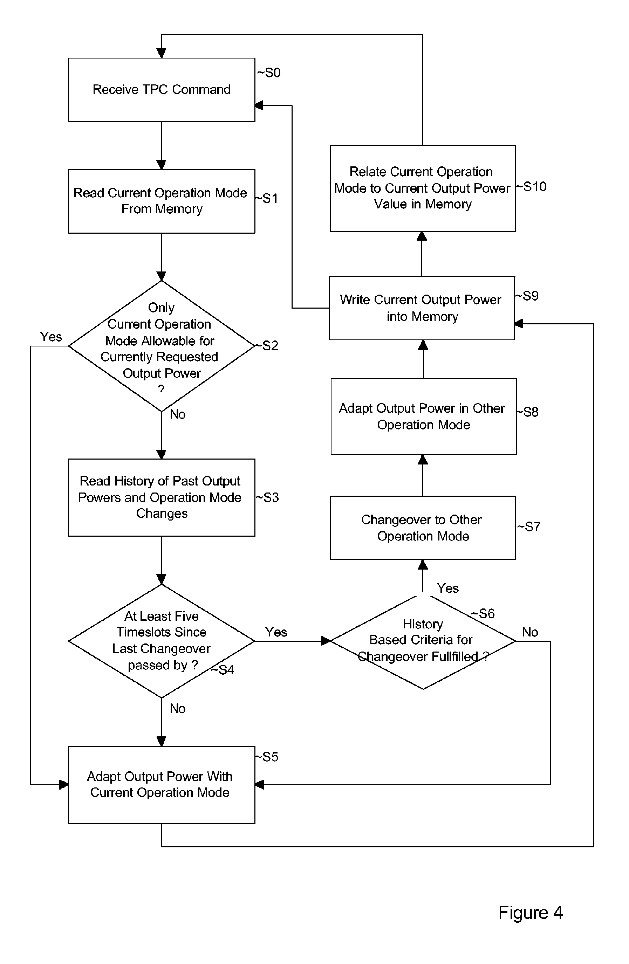

The flowchart of Figure 4 shows the basic steps of an above described timeslot based operation mode control according to the present invention. The illustrated procedure for an operation mode control regards only those cases, where there might be a possibility to switch the operation mode to a more energy-efficient one. The case where a power amplifier has to be switched because of getting to the upper threshold of an output power hysteresis range, is not indicated in the flowchart, but is of course presumed.

On receiving a TPC command during inner loop power control in step S0, the current operation mode of power amplifier 2 is read from a memory of the portable electronic equipment for wireless communication in step S1. If no other operation mode is allowable for the currently requested output power, which is checked in step S2, the procedure continues with adapting the output power of the output stage 1 in step S5 retaining the power amplifier 2 in its current operation mode. The basic admissibility of a further operation mode is checked by an examination of the requested output power with respect to threshold values defined for an output power hysteresis range or other threshold levels described above.

If step S2 results that the requested output power may also be achieved with a more energy-efficient operation state of the power amplifier, the procedure reads the history of past output powers and operation mode changes from a memory of the portable electronic equipment for wireless communication in step S3. Since according to the fifth slot approach no operation mode changeover is allowed within fife slots after the last changeover if the associated phase change would be above 30°, step S4 of the timeslot based operation mode procedure verifies, if at least five timeslots have passed by since the last operation mode changeover. This is best done by relating the past five of the stored output power entries with the operation modes used for it. Of course it is clear to a person skilled in the art that the number of five timeslots is only an example related to the fifth slot approach described above. Other specifications may require different numbers of timeslots which are then checked in step S4.

If the required number of timeslots is not given, the procedure continues with step S5 adapting the output without changing the current operation mode of power amplifier 2.

Else, the history of previous power changes and possibly also the circumstances of the power changes as e.g. used operation modes or the like is assessed and evaluated in step S6. If the history of the preceding past output power changes complies with the rules set for an operation mode changeover, the power amplifier 2 is set to the other possible but more energy-efficient operation mode in step S7. A history evaluation is effected according to one of the timeslot based operation mode controls described above.

After or synchronous with the changing to the other operation mode, the output power is adapted to the requested value in step S8. The then set value is stored in a memory of the portable electronic equipment for wireless communication in step 9. If desired at this point, the procedure relates in step S10 the now current operation mode to the now current output power value in a memory of the portable electronic equipment for wireless communication before it returns to step S0 for receiving a further TPC command.

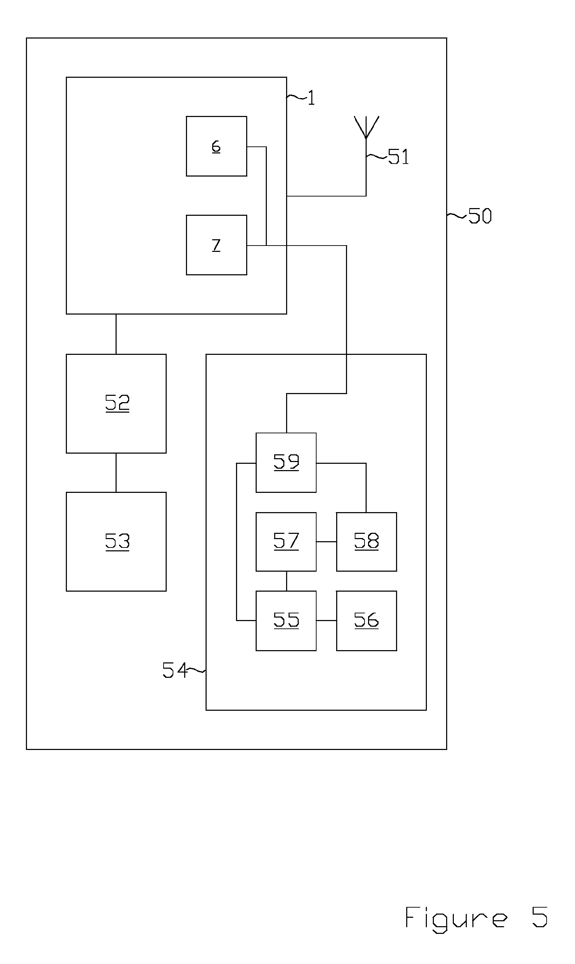

A portable electronic equipment 50 for wireless communication adapted for executing a timeslot based operation mode control described above like e.g. with respect to Figures 3a, 3b and 4 is schematically shown in Figure 5. The equipment 50 comprises an output stage 1 corresponding to an output stage 1 described with respect to Figure 1, an antenna 51 fed by output stage 1, a baseband circuit 52 providing signals to be transmitted to a modulator of output stage 1, a timeslot based operation mode control means 54 and further circuitry 53 comprising further means and components like input-/output interfaces, security means, processing and storage means, and the like more, which are necessary for the portable electronic equipment for wireless communication or form special features thereon.

The timeslot based operation mode control means 54 comprises an operation mode storage means 55 for storing a current mode value that is related to a current operation mode of the power amplifier 2 of the output stage 1. The storage means is further adapted to receive and store a mode efficiency value for each possible operation mode, i.e. a value representing the energy-efficiency of the respective operation mode at least relative to a further operation mode. The operation mode storage means may be formed by a separate memory device but may also be physically located within a memory or storage means present in the further circuitry 53 of equipment 50.

Operation mode control 54 further comprises an output power storage means 56 for storing values related to preceding output power settings of output stage 1. Like the operation mode storage means 55, the output power storage means 56 may be implemented by a separate memory device or within an already existing memory or storage means of the further circuitry 53. It may also be integrally formed with the operation mode storage means.

The operation mode control further comprises an output power history assessing means 57, for assessing a history of preceding output power settings of the output stage. The history assessment is based on the values stored in the output power storage means, whereby mode values representing previous and current operation modes may further be utilised. The history is usually only assessed for those past time periods, which are relevant for evaluating a possible trend for forthcoming output power requests. The output power history assessing means 57 may advantageously also update the values stored in the output power storage means 56 and the operation mode storage means 55.

An output power trend evaluation means 58 effects an evaluation of a trend value indicating the likeliness of a current output power of the output stage 1 to remain for a defined time period within a range enabling an operation of the power amplifier in at least one further operation mode. The output power trend evaluation means 58 examines in other words the data received from the output power history assessing means 57 according to criteria for a timeslot based operation mode control like described above e.g. with respect to Figures 3a, 3b and 4. This means for instance that either five slots have passed by since the last operation mode changeover, or the output power is below the lower threshold level for (at least) five (or a differently defined number of) slots, or a trend evaluation of a power change history complies with defined criteria or the like more.

The changing over of the operation mode is effected by an operation mode control means 59 of the operation mode control 54. The operation mode control means 59 causes the output stage 1 to switch the operation mode of the power amplifier 2 to the other possible and more energy-efficient operation mode, like e.g. the low bias mode. The control can be effected via the output power control 7 or directly via the mode switch 6 of the output stage 1. The changeover of the operation mode is only effected on the condition that the trend value evaluated by the output power trend evaluation means 58 indicates a sufficient likeliness for the output power to remain for the defined first time period within a range that enables an operation of the power amplifier in the current operation mode and in a further more energy-efficient operation mode. The energy-efficiency of the respective operation modes is controlled by the operation mode control means 59 using the related efficiency value stored in the operation mode storage means.

The term trend value indicates that the output powers requested from the portable electronic equipment for wireless communication in the near future are estimated to stay within a range where two operation modes are possible. Its practical use in the operation mode control means is however that of approving or denying an operation mode changeover by the operation mode control means 59.

The described operation mode control is for the most part implemented by software suited for being executed by a processing means of the portable electronic equipment for wireless communication. The software is typically stored in a storage means of the portable electronic equipment for wireless communication. The software comprises instructions, which are adapted to have the processing means perform a control mechanism in correspondence to a method corresponding to at least one of the timeslot based operation mode controls described above and/or the general operation mode control procedure explained with respect to Figure 4. An execution of the software on the portable electronic equipment for wireless communication forms thereon the means described as components of the operation mode control means 54.

An operation mode control according to the present invention advantageously enables a more flexible and energy-efficient power management of an output stage of a portable electronic equipment for wireless communication, which results in an increased on-air time of approximately 20%, when using the equipment in a UMTS system.

## Claims

1. Method for controlling the operation mode of a power amplifier of an output stage for portable electronic equipment for wireless communication (50), the method comprising steps for
- receiving a command requesting a change of the output power of power amplifier (2),
- identifying a current operation mode of power amplifier (2),
- determining if power amplifier (2) may be operated for the output power requested by the command in a further operation mode different to the current operation mode,
- assessing the history of preceding output power requests,
- evaluating from the assessed history of preceding output power requests a trend value indicating the likeliness of a future output power of the output stage (1) to remain for a defined time period within a range enabling an operation of the power amplifier also in the further operation mode,
whereby the operation mode is changed over from the current operation mode to the further operation mode on condition of the evaluated trend value indicating a sufficient likeliness for a future output power to remain for the defined time period within a range enabling an operation of the power amplifier in the further operation mode, and on condition that the further operation mode enables a more energy-efficient operation of the power amplifier than the current operation mode.

2. Method according to claim 1,
**characterised in**
**that** the trend value is evaluated based on the condition that the output power is requested to be below a defined threshold value, and no operation mode changeover was effected within a defined number of preceding time timeslots.

3. Method according to claim 1 or 2,
**characterised in**
**that** the trend value is evaluated based on the condition that the output power is requested to be below a defined threshold value for a minimum of a defined number of preceding timeslots.

4. Method according to claim 1, 2 or 3,
**characterised in**
**that** the trend value is evaluated based on the condition that the output power is requested to be below a defined threshold value and with no changes for a defined number of preceding timeslots.

5. Method according to one of the claims 1 to 4,
**characterised in**
**that** the trend value is evaluated based on the condition that the output power is requested to be below a defined threshold value and for a defined number of preceding timeslots the output power requested for a subsequent timeslot is lower or equal that of an anterior timeslot in the defined number of preceding timeslots.

6. Method according to claim 5,
**characterised in**
**that** all output power requests within the defined number of preceding timeslots are for an output power below the defined threshold value.

7. Operation mode control for a power amplifier of an output stage for portable electronic equipment for wireless communication (50) adapted for an operation of the power amplifier at two or more different operation modes, the operation mode control (54) comprising
- an operation mode storage means (55) for storing a current mode value related to a current operation mode of the power amplifier and for storing a mode efficiency value representing the energy-efficiency of an operation mode of the power amplifier,
- an output power storage means (56) for storing values related to preceding output power settings of the output stage (1),
- an output power history assessing means (57) for assessing a history of preceding output power requests for the output stage (1) based on values stored in the output power storage means,
- an output power trend evaluation means (58) being adapted to evaluate a trend value indicating the likeliness of a future output power of the output stage to remain for a defined time period within a range enabling an operation of the power amplifier in at least also a further operation mode different from the current operation mode, and
- an operation mode control means (59) for controlling the operation mode of the power amplifier based on the trend value and the current mode value,
whereby the operation mode control means (59) is adapted to changeover the operation mode of the power amplifier (2) from a current operation mode to a further operation mode on condition that the evaluated trend value indicates a sufficient likeliness for a future output power to remain for the defined time period within a range enabling an operation of the power amplifier in the further operation mode, and on condition that the further operation mode enables a more energy-efficient operation of the power amplifier than a current operation mode.

8. Operation mode control according to claim 7,
**characterised in**
**that** the operation mode control means (59) is adapted to control a changeover of the operation mode of the power amplifier (2) from a current operation mode to a further operation mode in correspondence to a method according to one of the claims 2 to 6.

9. Computer software product for controlling the operation mode of a power amplifier of an output stage for a portable electronic equipment for wireless
communication (50), the computer software product being adapted, when loaded into a storage means and processed by a data processing means of the electronic equipment for wireless communication (50) to set-up thereon an operation mode control according to one of the claims 7 or 8, and to perform thereon a method according to one of the claims 1 to 6.
